Europäisches Patentamt

European Patent Office

Office européen des brevets

(19)

(11) Numéro de publication : **0 096 756**
**B1**

(12) **FASCICULE DE BREVET EUROPÉEN**

(45) Date de publication du fascicule du brevet :
27.07.88

(51) Int. Cl.⁴ : **H 04 Q   3/00, H 04 M  19/08**

(21) Numéro de dépôt : **83104851.7**

(22) Date de dépôt : **17.05.83**

(54) Joncteur d'abonné électronique.

(30) Priorité : **19.05.82 FR 8208766**

(43) Date de publication de la demande :
**28.12.83 Bulletin 83/52**

(45) Mention de la délivrance du brevet :
**27.07.88 Bulletin 88/30**

(84) Etats contractants désignés :
**BE CH DE FR GB IT LI NL SE**

(56) Documents cités :
**DE-A- 2 649 351**
**GB-A- 2 050 114**
**GB-A- 2 093 314**
**US-A- 4 272 656**
**IEEE JOURNAL OF SOLID-STATE CIRCUITS, vol. SC-16, no. 4, août 1981, pages 270-278, New York, USA; W.D. PACE: "A monolithic telephone subscriber loop interface circuit"**

(73) Titulaire : **ALCATEL CIT**
**33, rue Emeriau**
**F-75015 Paris (FR)**

(72) Inventeur : **Albouy, Pierre**
**11, Cottages de Kertalou Route de Morlaix**
**F-22300 Lannion (FR)**
Inventeur : **Salahun, Yves**
**Lotissement Bonne Nouvelle**
**F-22560 Trebeurden (FR)**
Inventeur : **Botouin, Francois**
**Impasse Tal an Ilis Brélévenez**
**F-22300 Lannion (FR)**
Inventeur : **Cordani, Roberto**
**13, Résidence Foch**
**F-92380 Garches (FR)**

(74) Mandataire : **Weinmiller, Jürgen et al**
**Lennéstrasse 9 Postfach 24**
**D-8133 Feldafing (DE)**

## Description

L'invention concerne un joncteur d'abonné électronique qui assure le couplage entre une ligne d'abonné et un central téléphonique.

Les joncteurs d'abonnés doivent répondre à des spécifications précises notamment en ce qui concerne les impédances continue et alternative. Ils doivent assurer notamment la télé-alimentation de l'abonné, la détection de l'état de boucle, et la liaison avec le central, cette liaison étant soit du type deux fils soit du type quatre fils.

On connaît déjà des joncteurs d'abonnés électroniques, réalisés sous forme de circuits intégrés. Ces joncteurs utilisent des miroirs de courant.

Dans un premier type de joncteur, connu par le document FR-A-2 430 153, on lit le courant de ligne, on le traite, et on produit une tension de ligne. Le contrôle de cette tension par le courant de ligne simule une impédance ; l'impédance de pont d'alimentation et l'impédance dynamique qui sont différentes proviennent d'un traitement différent des composantes alternative et continue du courant de ligne. Dans ce premier type de joncteur, les parties actives sont constituées de trois miroirs de courant pour la lecture du courant de ligne et de deux transistors pour la production de la tension ligne.

Le courant de mode longitudinal qui circule dans chaque fil de la ligne d'abonné n'influe pas sur le fonctionnement du joncteur car il est éliminé par le système des trois miroirs de courant, tant qu'il est inférieur au courant transversal ; si le courant de mode longitudinal devient supérieur au courant transversal, le joncteur ne fonctionne plus. Il est par ailleurs nécessaire d'appairer les miroirs effectuant la lecture du courant. Enfin compte-tenu du fait que les composants électroniques doivent pouvoir supporter une tension de 70 volts efficaces pour la sonnerie, superposée à une tension de 48 volts continus d'alimentation, il est nécessaire de faire appel, pour les composants électroniques, à une technologie à prix de revient élevé.

Un deuxième type de joncteur est décrit dans le document IEEE Journal of Solid-State Circuits, volume SC-16, numéro 4, août 1981, pages 270-278. Dans ce deuxième type de joncteur, un circuit d'entrée délivre un courant proportionnel à la tension de ligne, et l'on injecte sur la ligne un courant fonction dudit courant proportionnel, donc de la tension de ligne. Ce type de joncteur fait également appel à des miroirs de courant, mais lorsque le courant de mode longitudinal dans la ligne devient égal ou supérieur au courant transversal, le joncteur ne fonctionne plus.

L'invention a pour but de remédier aux inconvénients des joncteurs connus, et de permettre notamment le fonctionnement en batterie inverse que les courants longitudinaux soient inférieurs ou supérieurs au courant transversal.

L'invention a pour objet un joncteur d'abonné électronique permettant une liaison entre une ligne d'abonné et un central téléphonique et comportant un circuit amplificateur d'entrée élaborant une tension de compensation proportionnelle à une tension de mode commun apparaissant sur la ligne, un circuit amplificateur de sortie alimenté par une batterie et relié en sortie à deux fils de la ligne d'abonné, le circuit amplificateur d'entrée comportant des moyens pour élaborer un courant proportionnel à la tension de ligne, caractérisé en ce que le joncteur comporte également un filtre en entrée au circuit amplificateur d'entrée et assurant la séparation des composantes continue et alternative du courant proportionnel à la tension de ligne à l'aide d'un seul élément capacitif et délivrant d'une part une tension proportionnelle à la composante alternative du signal de ligne, et d'autre part une tension proportionnelle à la composante continue du signal de ligne, un premier moyen pour relier la sortie du filtre délivrant une tension proportionnelle à la composante alternative du signal de ligne au central, et pour délivrer un courant égal au courant circulant dans une liaison avec le central, des deuxièmes moyens pour obtenir un courant constant, pour sommer algébriquement ledit courant constant avec un courant continu obtenu à partir de ladite tension proportionnelle à la composante continue du signal de ligne et avec le courant délivré par le premier moyen et pour fournir au circuit amplificateur de sortie un premier courant de commande égal à ladite somme algébrique, et des troisième moyens pour fournir à partir de ladite tension de compensation, par deux fils de liaison et sur chaque fil, un deuxième courant de commande au circuit amplificateur de sortie de manière à compenser des courants longitudinaux dans la ligne, chaque fil de liaison étant parcouru par le premier courant de commande, le circuit amplificateur de sortie délivrant sur chaque fil de la ligne un courant proportionnel à la somme algébrique, dans chaque fil de liaison, des premier et deuxième courants de commande.

L'invention sera bien comprise par la description qui va suivre d'un exemple non limitatif de réalisation, illustré par les figures annexées dans lesquelles :

— la figure 1 représente schématiquement un joncteur de l'invention,

— la figure 2 représente un circuit amplificateur d'entrée du joncteur selon la figure 1,

— la figure 3 représente un filtre du joncteur de la figure 1,

— la figure 4 représente un circuit d'interface du joncteur de la figure 1,

— la figure 5 représente un circuit de sommation, un circuit de compensation et un circuit amplificateur de sortie du joncteur de la figure 1,

— la figure 6 représente un circuit de détection de boucle du joncteur de la figure 1,

— la figure 7 représente une variante du circuit de sommation et du circuit de compensation de la figure 5,

— la figure 8 représente un circuit de détection de boucle en phase sonnerie du joncteur de la figure 1,

— la figure 9 représente une courbe de courant transversal en fonction de la tension de ligne, pour le joncteur de la figure 1.

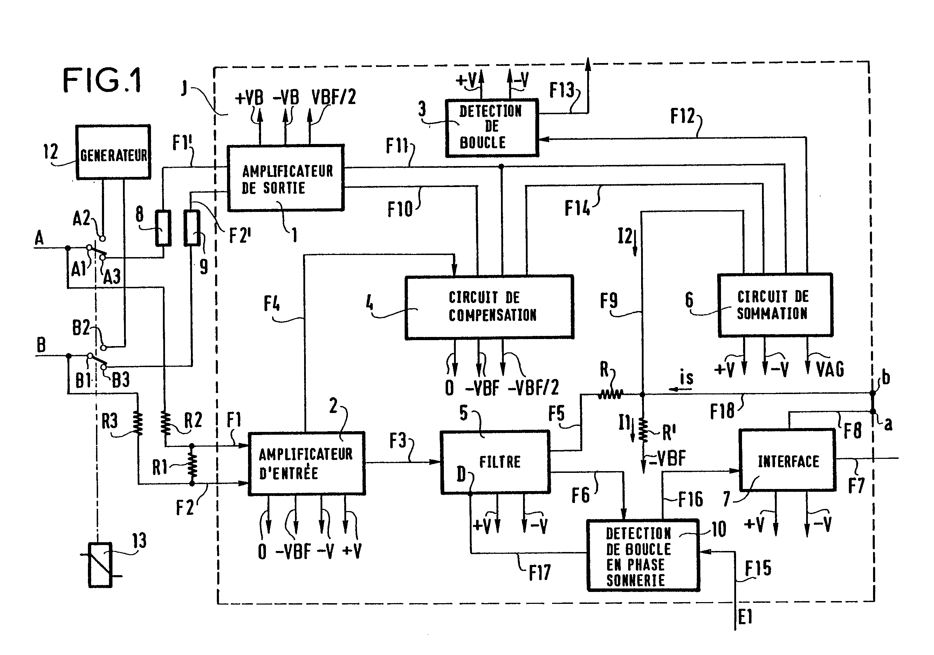

La figure 1 représente schématiquement un joncteur d'abonné J de l'invention, comprenant un circuit amplificateur de sortie 1, un circuit amplificateur d'entrée 2, un circuit de détection de boucle 3, un circuit de compensation 4 des courants longitudinaux, un filtre 5, un circuit de sommation 6 des courants continu et alternatif, un circuit d'interface 7 sur l'accès deux fils côté central, et un circuit de détection de boucle en phase sonnerie 10.

Une ligne d'abonné, fils A et B, est reliée à deux contacts mobiles A1 et B1 d'un relais de sonnerie 13. Un générateur de sonnerie 12 est rélié à deux contacts fixes A2, B2 ; deux autres contacts fixes A3 et B3 sont reliés à deux dispositifs de protection 8 et 9, respectivement reliés par un fil F1', F2' au circuit amplificateur de sortie1. Les fils A et B de la ligne d'abonné sont reliés directement à deux résistances R2 et·R3 respectivement, elles-mêmes reliées par des fils F1 et F2 au circuit amplificateur d'entrée 2 ; une résistance R1 est connectée entre les fils F1 et F2. Les dispositifs de protection 8 et 9 sont de tout type connu et assurent notamment la protection du joncteur contre les surcharges en courant ; les résistances R1, R2 et R3 ont chacune une forte valeur ; ces divers éléments sont extérieurs au joncteur J.

Le circuit amplificateur d'entrée 2 est relié en sortie par un fil F4 au circuit de compensation 4 et par un fil F3 au filtre 5, lui-même relié en sortie par un fil F6 au circuit de détection de boucle en phase sonnerie 10. Le filtre 5 est également relié en sortie, par un fil F5, à une résistance R reliée d'une part au circuit de sommation 6 par un fil F9 et d'autre part à un potentiel —VBF par une résistance R'.

Le circuit de détection de boucle en phase sonnerie 10 est relié par un fil F16 au circuit d'interface 7 et par un fil F17 à une borne D du filtre 5 ; il est également relié à un fil F15 par lequel il reçoit un signal de commande E1.

Le circuit d'interface 7 est relié à un fil F7 qui constitue avec la masse un accès deux fils du joncteur. Il est également relié par un fil F8 à une borne a ; une borne b est reliée par un fil F18 à un point commun aux résistances R et R' ; dans la version deux fils les bornes a et b sont reliées entre elles ; cependant la disponibilité de ces deux bornes a et b autorise, à partir de ces bornes, la création d'une transformation quatre fils.

Le circuit amplificateur de sortie 1 est relié par un fil F10 au circuit de compensation 4 ; il est également relié, par un fil F11, au circuit de compensation 4 et au circuit de sommation 6.

Le circuit de sommation 6 est relié par un fil F14 au circuit de compensation 4 et par un fil F12 au circuit de détection de boucle 3 dont la sortie est reliée à un fil F13.

Les différents circuits 1 à 7 sont alimentés par des groupes d'alimentation continues dont les potentiels sont repérés —V, + V ; — VB, + VB ; 0 — VBF et —VBF/2. Les potentiels — VB et + VB sont ceux de la batterie assurant l'alimentation en puissance du joncteur. Les potentiels 0 et — VBF sont les potentiels fixes d'une tension batterie filtrée, le potentiel —VBF/2 étant le potentiel milieu de la tension batterie filtrée, et le potentiel 0 étant mis à la terre. Les potentiels — VB et + VB sont symétriques par rapport au potentiel —VBF/2. Le potentiel VAG est celui d'une masse analogique ; les potentiels — V et + V sont ceux d'une source d'alimentation continue, et sont symétriques par rapport au potentiel VAG. La source d'alimentation continue de potentiels — V, + V est une source d'alimentation de petite valeur permettant le fonctionnement des organes électroniques de traitement du joncteur. La tension de batterie filtrée, potentiels 0, — VBF, sert de référence ; il n'y a pas de consommation de puissance sur cette source. La batterie, potentiels — VB, + VB est l'alimentation de puissance du joncteur ; le joncteur de l'invention a été conçu de façon à pouvoir fonctionner en ayant seulement une tension batterie égale à la tension de ligne augmentée de quelques volts. L'avantage de ce choix pour les alimentations réside dans le fait qu'ainsi le fonctionnement du joncteur reste identique même si la tension de batterie varie, tant pour les paramètres statiques et de mode commun que pour les paramètres dynamiques. En effet, contrairement à certains joncteurs utilisant une variation de tension en vue de diminuer la puissance dissipée dans la ligne d'abonné, il n'y a, avec le joncteur de l'invention, aucune variation de la tension moyenne de ligne.

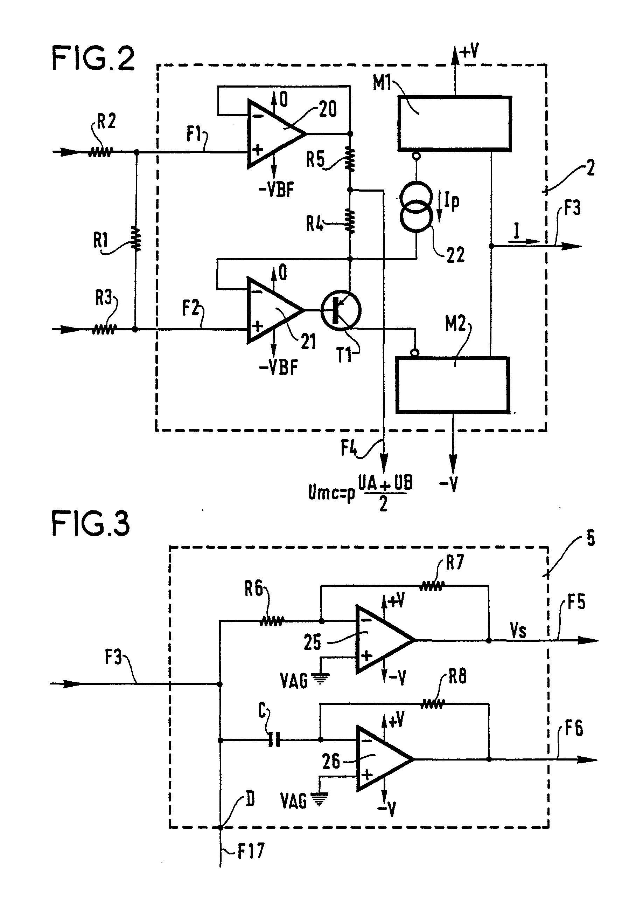

La figure 2 représente le schéma du circuit amplificateur d'entrée 2 de la figure 1.

Dans cette figure, 20 et 21 sont deux amplificateurs différentiels. Le fil F1 est relié à une entrée positive de l'amplificateur 20 dont l'entrée négative est reliée à la sortie. Le fil F2 est relié à une entrée positive de l'amplificateur 21. La sortie de l'amplificateur 21 est reliée à la base d'un transistor T1 dont l'émetteur est relié d'une part à l'entrée négative de l'amplificateur 21 et d'autre part à la sortie de l'amplificateur 20 par deux résistances en série R4, R5, de même valeur ; le point commun aux résistances R4 et R5 est relié au fil F4. Deux miroirs de courant M1 et M2, reliés aux potentiels + V et — V, respectivement, ont chacun une borne de sortie reliée au fil F3 ; le rapport des signaux sortie/entrée est égal à 1 pour chacun des miroirs de courant M1 et M2. Le miroir de courant M1 a une borne d'entrée reliée à travers un générateur de courant 22 à l'émetteur du transistor T1 dont le collecteur est relié à une borne d'entrée du miroir de courant M2. Les amplificateurs 20 et 21 sont alimentés par la tension batterie filtrée, potentiels 0 et — VBF.

Les résistances R1, R2 et R3 constituent un réseau atténuateur dont la fonction est de ramener

0 096 756

l'amplitude des signaux présents sur la ligne dans les limites de fonctionnement des amplificateurs 20 et 21. On opère ensuite une transformation tension-courant par l'intermédiaire des résistances R4 et R5 et du transistor T1, dont le collecteur délivre un courant proportionnel à la tension d'entrée dans les conditions normales de polarisation. Cependant, en inversion de batterie et en phase sonnerie, le courant dans les résistances R4 et R5 s'inverse ; aussi il est nécessaire que le générateur de courant 22 génère un courant constant Ip supérieur au courant issu de la transformation tension courant par les résistances R4, R5. Le jeu des miroirs de courant M1 et M2 annule l'effet du courant constant Ip sur la sortie, fil F3, du circuit amplificateur d'entrée 2. On dispose donc en sortie d'un courant proportionnel à la tension différentielle d'entrée entre les fils F1 et F2, courant référencé par rapport au potentiel de la masse analogique VAG. Le circuit amplificateur d'entrée 2 fonctionne donc également en inversion de batterie et permet la lecture d'une tension différentielle d'entrée élevée, comme c'est le cas pour la détection de boucle en phase sonnerie. Il délivre en sortie un courant donné par la relation :

$$I = \frac{R1(UA - UB)}{(R1 + R2 + R3)(R4 + R5)} = \frac{R1(UA - UB)}{(R1 + 2R2)2R4} \tag{1}$$

lorsque R2 = R3 et R4 = R5.

UA et UB sont respectivement les potentiels des fils d'abonnés A et B, figure 1, par rapport au potentiel 0 de la batterie.

Le circuit amplificateur d'entrée 2 délivre, sur le fil F4, une tension

$$Umc = p\frac{UA + UB}{2}$$

proportionnelle à la valeur moyenne des tensions sur chaque fil A et B, p étant un coefficient de proportionnalité ; cette tension sur le fil F4 est nulle en l'absence de courants longitudinaux.

Le circuit amplificateur d'entrée présente une haute impédance d'entrée, tout au moins vis-à-vis de l'impédance de la ligne ; son taux de réjection en mode commun n'a pas lieu d'être très élevé puisque le joncteur comporte un circuit de compensation 4 des courants longitudinaux.

La figure 3 représente le filtre 5 de la figure 1, constitué essentiellement par deux amplificateurs différentiels 25 et 26, alimentés chacun par la source de tension continue de potentiels + V, — V. Le fil F3, est relié d'une part à l'entrée négative de l'amplificateur 25 par une résistance R6 et d'autre part à l'entrée négative de l'amplificateur 26 par un condensateur C. La sortie et l'entrée négative de l'amplificateur 25 sont reliées par une résistance R7. La sortie et l'entrée négative de l'amplificateur 26 sont reliées par une résistance R8. La sortie de l'amplificateur 25 est reliée au fil F5 et la sortie de l'amplificateur 26 est reliée au fil F6.

Le filtre assure la séparation des composantes continue et alternative d'un signal image de la tension de ligne, la composante continue étant aiguillée vers le fil F5 et la composante alternative étant aiguillée vers le fil F6. En sortie de l'amplificateur 25 on retrouve une tension Vs = k(UA — UB), avec un rapport k dépendant du réseau constitué par les résistances R1, R2, R3, des résistances R4 et R5 du circuit amplificateur d'entrée 2, figure 2, et des résistances R6 et R7.

Le courant I2, figure 1, qui est le courant de commande du courant transversal dans la ligne d'abonné, est égal à :

$$\frac{VBF}{R'} - \frac{Vs}{R} + is ;$$

le courant is est délivré par le circuit d'interface 7 et est égal au courant circulant dans le fil F7 qui relie le circuit d'interface au central. Pour que ce courant I2 s'annule lorsque la différence de tension UA — UB est égale à la tension de la batterie, il faut que

$$R' = \frac{R}{k},$$

is ayant une valeur moyenne nulle.

Les amplificateurs 25 et 26, et leurs circuits associés, constituent respectivement un filtre passe-bas et un filtre passe-haut. La fréquence de coupure de ces filtres est la même, et égale à

$$\frac{1}{2 \cdot R6 \cdot C}.$$

A titre d'exemple on aura les valeurs suivantes :
R6 = R7 = 7.500 Ohms, R8 = 90.000 Ohms, C = 300 nF, avec k = 1/5 .

Dans le joncteur de l'invention la détection de boucle est assurée par le circuit de détection de boucle

4

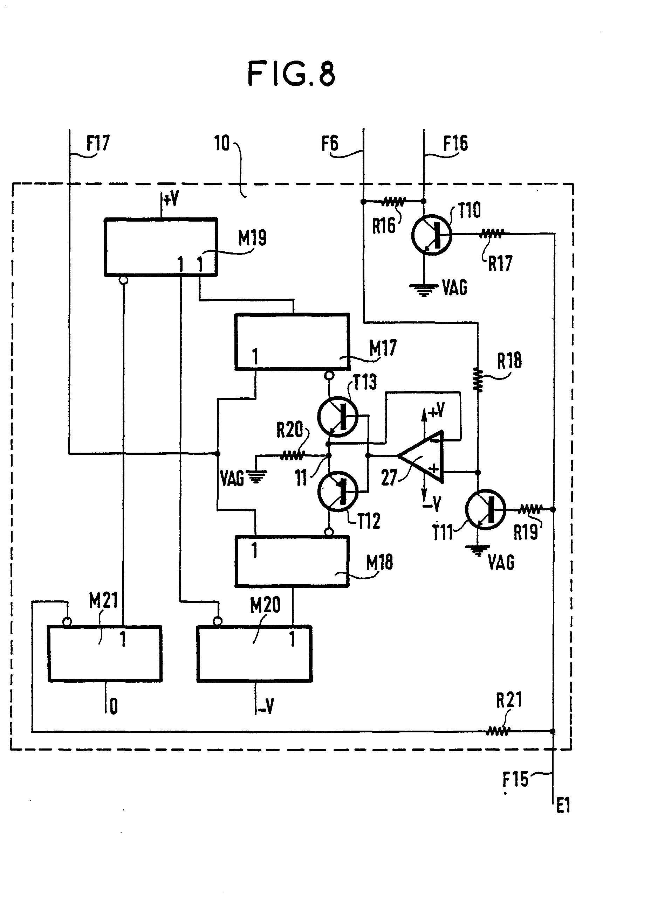

3 ; cette détection se fait par observation de la tension ligne après filtrage par le filtre 5. En phase d'alimentation normale, ce filtrage n'est pas critique car il doit autoriser la lecture de la numérotation et atténuer la bande de parole qui de toute façon ne contient que des signaux de faible amplitude par rapport aux ouvertures et fermetures de la boucle. Par contre en phase sonnerie le problème est plus délicat ; il s'agit en effet d'éliminer le signal de sonnerie de fréquence relativement basse, 25 Hz par exemple, et d'amplitude élevée. Ceci conduit à un filtre de constante de temps plus faible que dans le cas de l'alimentation normale. Pour cela, on peut augmenter la valeur du condensateur C du filtre en reliant une borne D de celui-ci à un condensateur à travers un contact du relais de sonnerie 13, figure 1, le condensateur étant relié au potentiel analogique VAG, et la borne D étant reliée dans le filtre au fil F3. On peut également multiplier par un procédé électronique la valeur du condensateur C du filtre ; ceci est réalisé par le circuit de détection de boucle en phase sonnerie 10 de la figure 1, représenté figure 8. Dans ce circuit 10, le fil F6 relié à la sortie de l'amplificateur 26 du filtre est relié par une résistance R16 de forte valeur au fil F16, lui-même relié au circuit d'interface 7. Un transistor T10 a son collecteur relié au fil F16, son émetteur relié au potentiel analogique VAG et sa base reliée par une résistance R17 au fil F15. Un transistor T11 a son collecteur relié par une résistance R18 au fil F6, son émetteur relié au potentiel analogique VAG, et sa base reliée par une résistance R19 au fil F15. Un amplificateur différentiel 27, alimenté par la source de tension continue de potentiels + V et — V, a une entrée positive reliée au collecteur du transistor T11 et une sortie reliée à chaque base de deux transitors T12 et T13.

Le transistor T13 a son collecteur relié à une entrée d'un miroir de courant M17 et son émetteur relié à l'émetteur du transistor T12 ; un point commun 11 aux émetteurs des transistors T12 et T13 est relié d'une part au potentiel analogique VAG par une résistance R20, et d'autre part à l'entrée négative de l'amplificateur 27. Le collecteur du transistor T12 est relié à une entrée d'un miroir de courant M18. Les miroirs de courant ont chacun une sortie reliée au fil F17, lui-même relié à la borne D du filtre 5. Un miroir de courant M19 a une entrée reliée au potentiel + V, une sortie reliée à une entrée du miroir de courant M17, une sortie reliée à une entrée d'un miroir de courant M20 et une entrée reliée à une sortie d'un miroir de courant M21. Le miroir de courant M20 a une entrée reliée à une sortie du miroir de courant M18 et une sortie reliée au potentiel — V. Le miroir de courant M21 a une entrée reliée au fil F15 par une résistance R21 et une sortie reliée au potentiel 0. Lorsqu'un signal E1 est appliqué sur le fil F15, en phase sonnerie, on lit le courant i délivré par l'amplificateur 26 du filtre 5, figure 3, sur le fil F6, courant qui est proportionnel au courant traversant le condensateur C du filtre. Ce courant est multiplié par l'amplificateur 27 du circuit 10 par une valeur G, et réinjecté par le fil F17 au point D du filtre 5, par l'intermédiaire d'un interrupteur analogique réalisé à l'aide des miroirs de courant M17, M18, M19, M20, M21 et des deux transistors T12 et T13. On applique donc sur la borne D un courant Gi ; entre la borne D du filtre 5 et le potentiel analogique VAG on a donc l'équivalent d'un condensateur de valeur $(G + 1)C$. Le circuit de détection de boucle en phase sonnerie 10 permet donc bien d'obtenir un filtre de constante de temps plus grande en phase sonnerie, ce qui améliore le filtrage et permet d'avoir une meilleure composante continue sur le fil F5 en sortie du filtre 5.

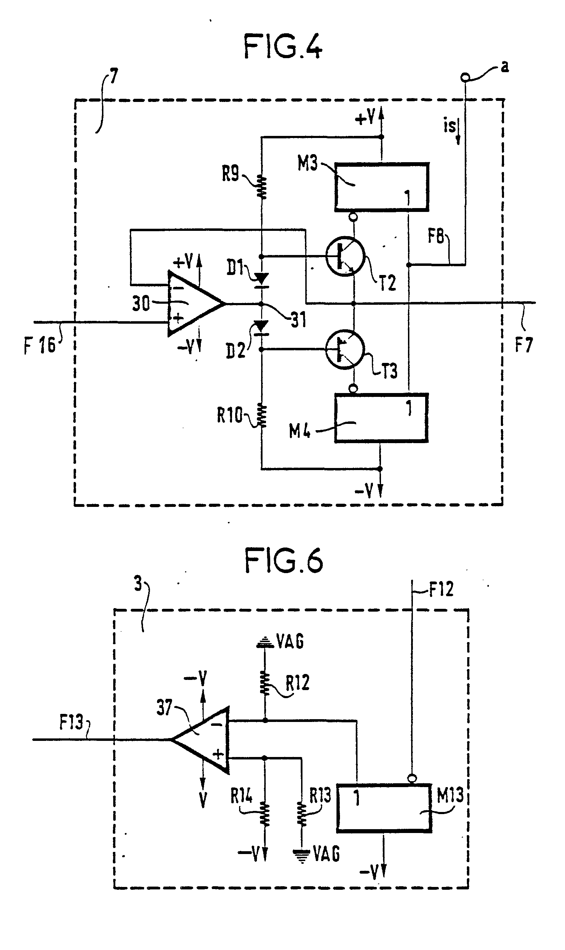

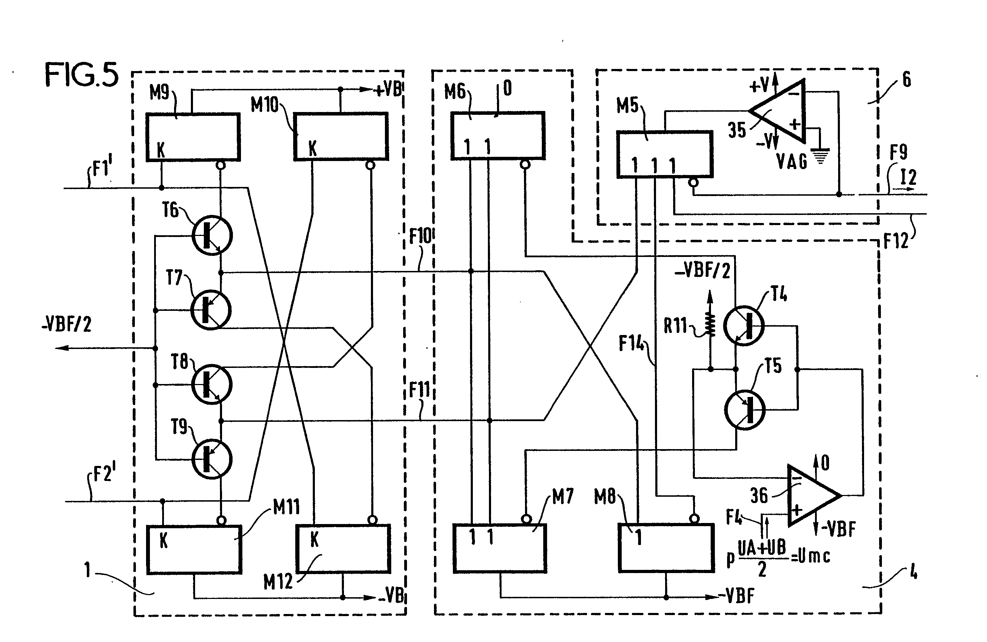

La figure 4 représente le circuit d'interface 7 de la figure 1. Un amplificateur différentiel 30 a une entrée positive reliée au fil F16 et son entrée négative est reliée au fil F7. Une chaine série comprenant une résistance R9, deux diodes D1, D2 et une résistance R10 est branchée entre les potentiels + V et — V ; un point 31 commun aux deux diodes est relié à la sortie de l'amplificateur 30. Deux miroirs de courant M3 et M4 reliés respectivement aux potentiels + V et — V sont reliés chacun en sortie au fil F8 ; une entrée du miroir de courant M3 est reliée au collecteur d'un transistor T2 dont l'émetteur est relié au fil F7 ; une entrée du miroir de courant M4 est reliée au collecteur d'un transistor T3 dont l'émetteur est relié au fil F7. La base du transistor T2 est reliée à un point commun à la résistance R9 et à la diode D1 ; la base du transistor T3 est reliée à un point commun à la diode D2 et à la résistance R10. Les transistors T2 et T3 sont complémentaires, le transistor T2 étant du type NPN et le transistor T3 du type PNP.

L'amplificateur 30 reçoit donc par le fil F16 une tension correspondant à la composante alternative image du signal sur la ligne d'abonné, la tension délivrée sur le fil F7 étant égale à la tension sur le fil F16, l'amplificateur 30 ayant un gain unité. Le courant is dans le fil F8 est égal à la différence des courants de sortie des miroirs de courant M3 et M4, donc des transistors T2 et T3, le rapport entre entrée et sortie de chaque miroir de courant étant égal à 1 ; le courant dans le fil F8 est donc proportionnel à la composante alternative du courant dans la ligne d'abonné. Il est donc possible de faire passer un léger courant de repos dans les transistors, ce qui évitera les distorsions dues à la commutation de ces transistors. Le fil F8 est relié à la borne a ; comme indiqué à la figure 1 cette borne est reliée à une borne b elle-même reliée au fil F9.

La figure 5 représente le circuit amplificateur de sortie 1, le circuit de compensation 4 et le circuit de sommation 6 de la figure 1.

Le circuit de sommation 6 comporte un amplificateur différentiel 35, alimenté par la source d'alimentation continue de potentiels + V et — V, et un miroir de courant M5 ayant son alimentation reliée à la sortie de l'amplificateur 35, lequel a une entrée positive reliée à la masse analogique VAG et une entrée négative reliée au fil F9. Le miroir de courant M5 a une entrée, reliée au fil F9 ; le miroir de courant M5 a trois sorties, reliées à un fil, F11, F12, F14, respectivement (figure 1). Pour chaque sortie le rapport des signaux sortie/entrée est égal à 1. On a vu que le filtre 5 effectuait la séparation des composantes alternatives et continue du signal image du signal de ligne, et que le courant I2, figure 1, était égal à

**0 096 756**

$$\frac{VBF}{R'} - \frac{Vs}{R} + is\ ;$$

Le fil F9 est relié aux résistances R et R', elles-mêmes reliées à la borne b par le fil F18 ; la borne b étant reliée à la borne a elle-même reliée au circuit d'interface 7, le circuit de sommation 6 reçoit du circuit d'interface le courant is.

Le circuit de compensation 4 comporte trois miroirs de courant M6, M7, M8, un amplificateur différentiel 36, et deux transistors T4, T5 de type NPN et PNP, respectivement. Le miroir de courant M6 est relié au potentiel 0 et les miroirs de courant M7 et M8 sont reliés au potentiel — VBF. Le miroir de courant M8 a une entrée reliée par le fil F14 à une sortie du miroir de courant M5 du circuit de sommation 6 ; il a une sortie reliée au fil F10, le rapport des signaux sortie/entrée étant égal à 1.

L'amplificateur différentiel 36 a une entrée positive, reliée par le fil F4 au circuit amplificateur d'entrée 2, figure 2, qui reçoit donc un signal

$$p\frac{UA + UB}{2}$$

et une entrée négative reliée d'une part au potentiel — VBF/2 par une résistance R11 et d'autre part aux émetteurs des deux transistors T4 et T5. Le transistor T4 a son collecteur relié à une entrée du miroir de courant M6 et le transistor T5 a son collecteur relié à une entrée du miroir de courant M7. Les bases des transistors T4 et T5 sont reliées entre elles et reliées à la sortie de l'amplificateur différentiel 36 alimenté par la tension de batterie filtrée, potentiels 0 et — VBF. Les miroirs de courant M6 et M7 ont chacun deux sorties reliées au circuit amplificateur de sortie 1 par les fils F10 et F11 ; le rapport des signaux sortie/entrée est égal à 1 pour chacune des sorties des miroirs de courant M6 et M7.

Le circuit amplificateur de sortie 1 comporte quatre miroirs de courant M9, M10, M11, M12 et un réseau d'aiguillage constitué par quatre transistors T6, T7, T8, T9 de type NPN, PNP, NPN et PNP, respectivement. Les émetteurs des transistors T6 et T7 sont reliés entre eux et reliés au fil F10 ; les émetteurs des transistors T8 et T9 sont reliés entre eux et reliés au fil F11.

Les bases des transistors T6, T7, T8, T9 sont reliées au potentiel — VBF/2. Le collecteur du transistor T6 est relié à une entrée du miroir de courant M9 ; le collecteur du transistor T7 est relié à une entrée du miroir de courant M12 ; le collecteur du transistor T8 est relié à une entrée du miroir de courant M10 ; le collecteur du transistor T9 est relié à une entrée du miroir de courant M11. Les miroirs de courant M9 et M12 ont chacun une sortie reliée au fil F1' ; les miroirs de courant M10 et M11 ont chacun une sortie reliée au fil F2'. Le rapport des signaux sortie/entrée est égal à K pour chacun des miroirs de courant M9, M10, M11, M12.

Les circuits de sommation 6, de compensation 4 et amplificateur de sortie 1 permettent, à partir du courant I2, fil F9, d'obtenir un courant dans chaque fil F1' et F2', donc dans chaque fil A et B de la ligne (figure 1).

La figure 6 représente le circuit de détection de boucle 3 de la figure 1, qui comporte essentiellement un miroir de courant M13 et un amplificateur différentiel 37 dont l'alimentation est reliée aux potentiels + V et — V. Une entrée du miroir de courant M13 est reliée par le fil F12 à une sortie de courant M5 du circuit de sommation 6, représenté figure 5. Une sortie du miroir de courant M13 est reliée d'une part à une entrée négative de l'amplificateur différentiel 37 et d'autre part, à travers une résistance R12, au potentiel VAG ; le miroir de courant M13 est également relié au potentiel — V. Une entrée positive de l'amplificateur différentiel 37 est reliée d'une part au potentiel VAG par une résistance R13, et d'autre part au potentiel — V par une résistance R14. La sortie de l'amplificateur différentiel 37 est reliée au fil F13 qui constitue une sortie du joncteur et achemine un signal lorsque le circuit de détection de boucle 3 a détecté la fermeture de la ligne d'abonné suite à un décrochage du combiné téléphonique. L'amplificateur différentiel 37 pourra être avantageusement remplacé par un comparateur à hystérésis de manière à différencier les seuils de décrochage et de raccrochage.

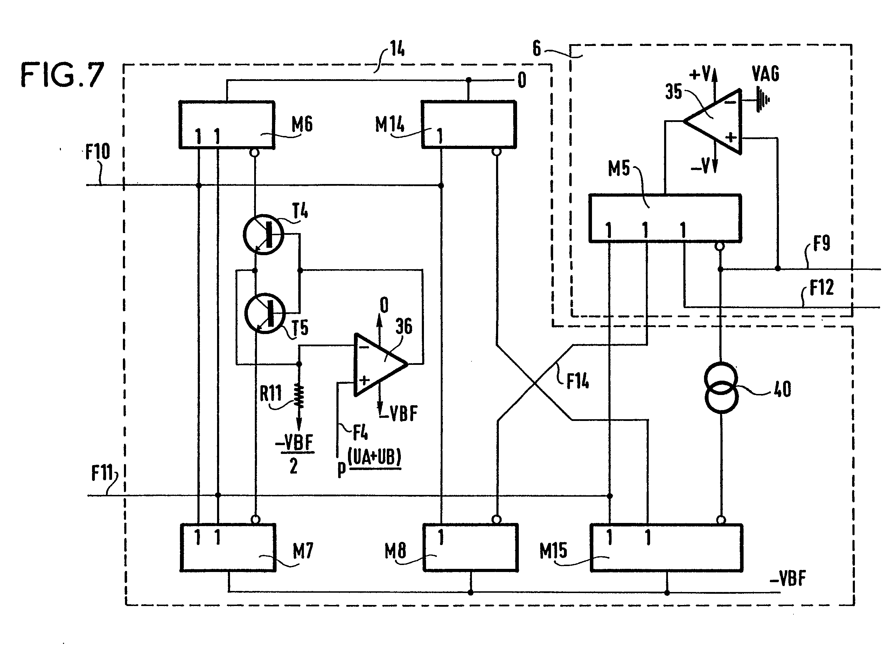

La figure 7 représente une variante du circuit de compensation 4 de la figure 5, cette variante permettant l'inversion de la batterie alimentant le joncteur. On a vu que la compensation des courants longitudinaux supérieurs au courant transversal imposait un ensemble de quatre miroirs de courant dans le circuit amplificateur de sortie 1, représenté figure 5 ; les courants dans les fils A et B de la ligne d'abonné, donc dans les fils F1' et F2' du circuit amplificateur de sortie 1, pouvant circuler dans l'un ou l'autre sens, ceci permet d'envisager l'inversion de la batterie. Pour cela la partie correspondant à la commande des miroirs de courant M9, M10, M11 et M12 du circuit amplificateur de sortie 1 doit être modifiée, c'est-à-dire le circuit de compensation 4 de la figure 5.

La figure 7 représente également le circuit de sommation 4 de la figure 5, ce circuit n'étant pas modifié. Dans la figure 7 le circuit de compensation 14 comporte des miroirs de courant M6, M7, M8, M14, M15, des transistors T4 et T5, un amplificateur différentiel 36, une résistance R11 et un circuit de polarisation 40. A l'exception des miroirs de courant M14 et M15 et du circuit de polarisation 40, tous les autres éléments et leurs liaisons sont les mêmes que ceux de la figure 5. Le miroir de courant M14 a une sortie reliée au fil F10 et à la sortie du miroir de courant M8, et une entrée reliée à une sortie du miroir de

6

courant M15. Le miroir de courant M15 a une autre sortie reliée au fil F11 et à une sortie du miroir de courant M15, et une entrée reliée à l'entrée du miroir de courant M5 par l'intermédiaire du circuit de polarisation 40. Le miroir de courant M14 est relié au potentiel 0 et le miroir de courant M15 est relié au potentiel — VBF.

Le joncteur de l'invention est un système générateur de courant où le courant est une fonction de la tension de ligne et du courant de sortie.

En effet la tension différentielle de ligne est lue par le circuit amplificateur d'entrée 2 qui délivre en sortie, sur le fil F3, un courant I donné par la relation (1) qui est appliqué au filtre 5.

La tension différentielle de ligne étant constituée d'une composante continue et d'une composante alternative, le filtre 5 effectue la séparation des composantes. En sortie du filtre, on obtient une tension Vs sur le fil F5 qui crée à travers la résistance R, figure 1, un courant qui vient s'opposer dans le fil F9 au courant généré par la tension de batterie filtrée à travers la résistance R', de sorte que le courant résultant dans le fil F9 est le courant

$$I2 = \frac{VBF}{R'} - \frac{Vs}{R} + is \; ;$$

la composante continue de ce courant I2 est égale à

$$\frac{VBF}{R'} - \frac{Vs}{R}$$

La composante continue de ce courant est multipliée, par les miroirs de courant de sortie du circuit amplificateur de sortie 1, par un coefficient K. On a donc, en désignant par IT le courant transversal dans la ligne d'abonné :

$$IT = KI1 = \frac{K\,VBF}{R'} - \frac{K\,Vs}{R}$$

avec Vs = k(UA — UB).

Pour une tension de ligne nulle, UA — UB = 0 on a :

$$IT\,max = \frac{K\,VBF}{R'}$$

et pour un courant de ligne IT nul on a :

$$UA - UB = \frac{R}{R'} \cdot \frac{VBF}{k} \, .$$

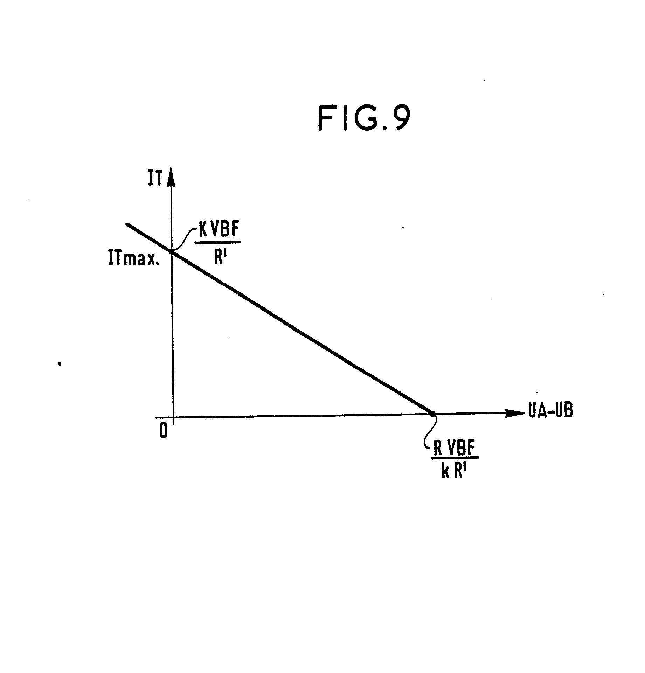

La figure 9 représente la fonction IT = f(UA — UB) qui est une fonction linéaire sur laquelle on peut faire une limitation de courant, par exemple en limitant la tension Vs = k(UA — UB), en sortie du filtre 5. Le coefficient k dépend du réseau atténuateur constitué par les résistances R1, R2 et R3, figure 1, et des résistances R4 et R5, figure 2 ; la caractéristique statique du joncteur de l'invention est donc fixée par le coefficient k et la tension de batterie filtrée (0, — VBF), et il est aisé en jouant sur ces paramètres d'obtenir un fonctionnement en batterie normale, en batterie inverse, ou encore en mode purement résistif sans batterie.

La composante alternative de la tension de ligne est envoyée vers la sortie deux fils du joncteur, via le filtre 5 et le circuit d'interface 7 ; cette composante alternative se retrouve donc sur le fil F7 en sortie du circuit d'interface qui lit, à l'aide des miroirs de courant M3 et M4, le courant sur le fil F7, et le réinjecte via les fils F8, F18, F9 dans le circuit de sommation 6 qui reçoit d'autre part la composante continue du courant de la ligne d'abonné délivrée par le filtre 5. On trouve donc sur la ligne d'abonné deux composantes de courant, une composante continue et une composante alternative, provenant des deux traitements différents effectués sur les deux composantes de la tension de ligne. On a donc, d'un point de vue dynamique, l'équivalent d'un transformateur, puisque la tension en sortie est proportionnelle à la tension à l'entrée et que les courants sont eux aussi liés. L'impédance de la ligne d'abonné vue de l'entrée du joncteur est donc fonction de l'impédance de sortie du joncteur.

Dans le fonctionnement décrit ci-dessus le joncteur se comporte, du point de vue dynamique, comme un transformateur et, comme tel, l'entrée côté ligne d'abonné présente, en ce qui concerne le mode commun, une haute impédance. En effet, sur les accès à la ligne, on trouve d'une part deux sources de courant, une par fil de ligne, qui sont constituées par le circuit amplificateur de sortie 1, et d'autre part le circuit amplificateur d'entrée 2. Dans ces conditions, et si l'on renvoie une tension de mode commun sur la ligne, la sortie du circuit amplificateur d'entrée ne délivrera aucun signal et aucune contre-réaction ne se produira sur la tension de mode commun. L'impédance de mode commun du joncteur serait donc élevée et celui-ci n'opposerait donc aucune résistance aux perturbations longitudinales sur la ligne.

7

Quand ces perturbations longitudinales seraient assez fortes pour amener les tensions sur les fils de ligne A et B hors de la zone se situant entre les tensions d'alimentation de la batterie, + VB et — VB, le joncteur ne fonctionnerait plus. En outre, l'équilibre entre deux sources de courant étant difficile à réaliser, une réalisation sans circuit de compensation des perturbations de mode commun serait vouée à l'échec ; c'est pourquoi le joncteur de l'invention comporte un circuit de compensation 4.

On va examiner à présent le fonctionnement du joncteur, et plus particulièrement celui du circuit de compensation 4 en présence de perturbations longitudinales. On a vu qu'en l'absence de toute correction, une perturbation longitudinale donnait naissance à une tension de mode commun. Si donc on est capable de « lire » cette tension de mode commun et de créer un courant longitudinal qui s'oppose à la perturbation, on créera ainsi une impédance pour les signaux de mode commun ; cette impédance sera fonction du gain de la boucle de réaction et sera donc ajustable pour que les signaux perturbateurs ne donnent pas des valeurs trop élevées de tension de mode commun.

La tension de mode commun

$$p\frac{UA + UB}{2},$$

est délivrée par le circuit amplificateur d'entrée 2 sur le fil F4. La boucle de contre-réaction est constituée par le circuit de compensation 4 et le circuit amplificateur de sortie 1. Dans les fils F10 et F11, figure 5, circulent deux courants qui commandent, via les transistors T6 à T9 et les miroirs de courant M9 à M12, les courants de ligne dans les fils F1' et F2'. Les courants dans les fils F10 et F11 résultent des courants délivrés d'une part par les miroirs de courant M5 et M8 ou encore, dans le cas d'inversion de batterie, figure 7, par les miroirs de courant M5, M8 et M14, M15, ces courants étant égaux et de sens opposés, et d'autre part par les miroirs de courant M6 et M7, figures 5 et 7, ces courants étant égaux et de mêmes sens. En conséquence les courants résultants dans les fils F10 et F11, qui sont appliqués au réseau d'aiguillage constitué par les quatre transistors T6 à T9, sont tels que leur demi-somme reste constante quelle que soit la valeur des courants de correction émis par les miroirs de courant M6 et M7. Ainsi, par action des miroirs de courant M6 et M7, on peut changer la valeur du courant longitudinal IA — IB sur la ligne d'abonné, en désignant par IA et IB les courants dans les fils A et B de la ligne, sans changer la valeur du courant transversal puisque

$$\frac{IA + IB}{2} = \frac{K(IF10 + IF11)}{2} = \text{constante},$$

en désignant par IF10 et IF11 les courants dans les fils F10 et F11.

Cette correction du courant longitudinal est effectuée par les miroirs de courant M6 et M7, et est commandée par la tension de mode commun

$$p\frac{UA + UB}{2}$$

issue du circuit amplificateur d'entrée 2. Cette tension engendre un courant dans la résistance R11, courant lu selon son sens par les transistors T4 et T5, et qui est répercuté par les miroirs de courant M6 et M7. Il est facile de montrer que l'impédance de mode commun créée par la boucle de contre-réaction, qui est donnée par le rapport tension de mode commun/courant longitudinal, a pour valeur R11/K.

Les trajets des courants dans les fils F10 et F11, en fonction de la valeur relative des courants transversaux et longitudinaux dans la ligne, sont les suivants :

a) Pas de perturbation longitudinale.

Dans ce cas il n'y a pas de tension de mode commun, les transistors T4 et T5 sont bloqués et il n'y a pas de courant dans la résistance R11 ni dans les miroirs de courant M6 et M7. Dans les fils F10 et F11 circulent donc deux courants égaux et de sens inverse issus des miroirs de courants M5 et M8, dans la figure 5, ou issus soit des miroirs de courant M5 et M8, soit des miroirs de courant M14 et M15, dans le cas de la figure 7 dont le circuit de compensation 14 est prévu pour le fonctionnement avec inversion de batterie. Selon le sens des courants dans les fils F10 et F11 ce sont les transistors T6 et T9 et les miroirs de courant M9 et M11, ou les transistors T7 et T8 et les miroirs de courant M10 et M12 qui fonctionnent.

b) Perturbation longitudinale de faible amplitude.

Dans ce cas la perturbation crée une tension de mode commun soit positive soit négative par rapport au potentiel — VBF/2. Selon le sens de la perturbation le courant dans la résistance R11 est tel qu'il circule soit par le transistor T4 soit par le transistor T5, et crée des courants dans les miroirs de courant M6 ou M7 (figures 5 et 7). Les courants dans les fils F1' et F2', en sortie du circuit amplificateur de sortie 1, sont donc inégaux, mais le sens reste le même que dans le cas où il n'y avait pas de perturbation longitudinale.

c) Perturbation longitudinale de forte amplitude.

Ces perturbations ont un effet, sur les miroirs de courant M6 et M7, identique aux perturbations de faible amplitude. Cependant l'amplitude des courants émis par les miroirs de courant M6 ou M7 est plus élevée que précédemment et elle peut être plus importante que celle du courant circulant dans les fils F10 et F11 en l'absence de perturbation ; dans ce cas on obtient dans les fils F10 et F11 deux courants inégaux mais de même sens. Alors, et selon le sens relatif du courant transversal et de la perturbation longitudinale, ce sont soit les miroirs de courant M9 et M10, soit les miroirs de courant M11 et M12 qui fonctionnent, selon l'aiguillage effectué par les transistors T6 à T9, aiguillage qui est fonction du sens des courants dans les fils F10 et F11 reliant le circuit de compensation 4 au circuit amplificateur de sortie 1.

Le joncteur décrit ci-dessus présente de nombreux avantages. Etant à base de miroirs de courant, d'amplificateurs et de transistors, il est donc facilement intégrable. Les performances du joncteur, en ce qui concerne la compensation des courants longitudinaux, dépendent essentiellement des deux résistances R4 et R5 du circuit amplificateur d'entrée 2. Le joncteur se comporte comme un transformateur, mais on a vu qu'il était possible de le faire fonctionner en transformateur d'impédance où l'impédance n'est pas liée au gain en tension. La compensation des perturbations longitudinales n'est limitée que par les possibilités technologiques de tenue en puissance des composants, et la compensation des courants longitudinaux s'effectue indépendamment de l'importance du courant transversal.

Le joncteur comporte une partie alimentée par la tension de batterie qui sert de référence et fixe ses caractéristiques, et une partie alimentée par des sources d'énergie n'influant pas sur son fonctionnement.

Le joncteur ayant un circuit amplificateur de sortie 1 comportant des miroirs de courant fonctionnant en source et en absorbeur sur les deux fils A et B de la ligne d'abonné, il est aisé de faire fonctionner le joncteur en alimentation normale, en batterie inverse, et en batterie nulle. Dans ce dernier cas, batterie nulle, le joncteur se comporte comme un transformateur sans caractéristique continue. Le joncteur détecte la boucle d'abonné en phase normale ou en phase sonnerie, et dans ce dernier cas le circuit de détection de boule en phase sonnerie 10 permet de se passer d'un condensateur supplémentaire ; le circuit de détection de boucle en phase sonnerie est intégrable, comme les autres circuits du joncteur.

**Revendications**

1. Joncteur d'abonné électronique permettant l'établissement d'une liaison entre une ligne d'abonné et un central téléphonique et comportant un circuit amplificateur d'entrée (2) élaborant une tension de compensation (Umc) proportionnelle à une tension de mode commun apparaissant sur la ligne, un circuit amplificateur de sortie (1) alimenté par une batterie et relié en sortie à deux fils (A, B) de la ligne d'abonné, le circuit d'amplificateur d'entrée (2) comportant des moyens (M1, M2, 22) pour élaborer un courant (I) proportionnel à la tension de ligne, caractérisé en ce que le joncteur comporte également un filtre (5) relié en entrée au circuit amplificateur d'entrée et assurant la séparation des composantes continue et alternative du courant (I) proportionnel à la tension de ligne à l'aide d'un seul élément capacitif (C) et délivrant d'une part une tension proportionnelle à la composante alternative de la tension de ligne, et d'autre part une tension proportionnelle à la composante continue de la tension de ligne, un premier moyen (7) pour relier la sortie du filtre (5) délivrant une tension proportionnelle à la composante alternative de la tension de ligne au central, et pour délivrer un courant (is) égal au courant circulant dans une liaison (F7) avec le central, des deuxièmes moyens (6, R') pour obtenir un courant constant (I1), pour sommer algébriquement ledit courant constant avec un courant continu obtenu à partir de ladite tension proportionnelle à la composante continue de la tension de ligne et avec le courant (is) délivré par le premier moyen (7) et pour fournir au circuit amplificateur de sortie (1) un premier courant de commande égal à ladite somme algébrique, et des troisièmes moyens (4) pour fournir à partir de ladite tension de compensation, par deux fils de liaison (F10, F11) et sur chaque fil, un deuxième courant de commande au circuit amplificateur de sortie de manière à compenser des courants longitudinaux dans la ligne, chaque fil de liaison étant parcouru par le premier courant de commande, le circuit amplificateur de sortie délivrant sur chaque fil (A, B) de la ligne un courant proportionnel à la somme algébrique, dans chaque fil de liaison (F10, F11), des premier et deuxième courants de commande.

2. Joncteur d'abonné électronique selon la revendication 1, caractérisé par le fait que le circuit amplificateur d'entrée (2) comporte deux amplificateurs différentiels (20, 21) alimentés chacun par une tension de batterie filtrée (0, — VBF), chaque amplificateur ayant une entrée reliée à un fil (A, B) de la ligne d'abonné, respectivement, les sorties des amplificateurs étant reliées par un circuit série constitué par deux résistances (R5, R4) et une jonction émetteur base d'un transistor (T1), un point commun aux deux résistances fournissant à un fil (F4) la tension de compensation (Umc), et que les moyens pour élaborer un courant (I) proportionnel à la tension de ligne sont constitués par deux miroirs de courant (M1, M2) et un générateur de courant (22), les deux miroirs de courant (M1, M2) étant alimentés par une source continue (+ V, — V), une entrée de commande d'un miroir de courant (M1) étant reliée par un générateur de courant (22) à l'émetteur du transistor (T1), une entrée de commande de l'autre miroir de courant (M2) étant reliée au collecteur du transistor (T1), une sortie de chaque miroir de courant étant reliée au filtre (5) par un fil (F3) dans lequel circule le courant proportionnel à la tension de ligne.

3. Joncteur d'abonné électronique selon la revendication 1, caractérisé par le fait que le filtre (5) comporte un premier et un deuxième amplificateurs différentiels (25, 26) alimentés par ladite source continue (+ V, — V) et ayant chacun une entrée positive reliée à une masse analogique (VAG), le premier amplificateur (25) ayant une entrée négative reliée par une résistance (R6) aux moyens élaborant le courant (I) proportionnel à la tension de ligne, et par une résistance de contre-réaction (R7) à sa sortie elle-même reliée par une autre résistance (R) aux deuxièmes moyens, le deuxième amplificateur (26) ayant une entrée positive reliée par le condensateur (C) aux moyens élaborant le courant (I) proportionnel à la tension de ligne, et par une résistance de contre-réaction (R8) à sa sortie.

4. Joncteur d'abonné électronique selon la revendication 1, caractérisé par le fait que les deuxièmes moyens sont constitués par un circuit de sommation (6) et une résistance (R'), ledit circuit de sommation comportant un amplificateur différentiel (35) et un miroir de courant (M5), l'amplificateur différentiel étant alimenté par une source continue (+ V, — V) ayant une entrée négative reliée d'une part à travers la résistance (R') à un potentiel négatif (— VBF) d'une tension de batterie filtrée, et d'autre part à travers une autre résistance (R) à la sortie du filtre (5) délivrant une tension proportionnelle à la composante continue de la tension de ligne, une entrée positive reliée à une masse analogique (VAG), et une sortie reliée à une entrée alimentation du miroir de courant, lequel a une entrée de commande reliée à l'entrée positive de l'amplificateur (35), une première sortie reliée à l'un des fils de liaison (F11), et une autre sortie reliée aux troisièmes moyens (4).

5. Joncteur d'abonné électronique selon la revendication 1, caractérisé par le fait que les troisièmes moyens sont constitués par un circuit de compensation (4) des courants longitudinaux comportant un premier (M6), un deuxième (M7) et un troisième (M8) miroirs de courant, un amplificateur différentiel (36) alimenté par une tension de batterie filtrée (0, — VBF) et deux transistors (T4, T5) en série, l'amplificateur ayant une entrée positive reliée au circuit amplificateur d'entrée (2) duquel elle reçoit la tension de compensation (Umc), une entrée négative reliée d'une part aux émetteurs des transistors et d'autre part, à travers une résistance (R11), à un potentiel milieu (— VBF/2) de la tension de batterie filtrée, et une sortie reliée aux bases des transistors, une entrée de commande du premier miroir de courant (M6) étant reliée au collecteur de l'un des transistors (T4) et une entrée de commande du deuxième miroir de courant (M7) étant reliée au collecteur de l'autre transistor (T5), une sortie des premier, deuxième et troisième miroirs de courant étant reliée à l'un des fils de liaison (F10), une autre sortie des premier et deuxième miroirs de courant étant reliée à l'autre fil de liaison (F11) lui-même relié aux deuxièmes moyens, le premier miroir de courant (M6) ayant une entrée alimentation reliée à un potentiel positif (0) de la tension de batterie filtrée, les deuxième et troisième miroirs de courant (M7, M8) ayant une entrée alimentation reliée au potentiel négatif (— VBF) de la tension de batterie filtrée.

6. Joncteur d'abonné électronique selon la revendication 1, caractérisé par le fait que le circuit amplificateur de sortie comporte un premier (M9), un deuxième (M10), un troisième (M11) et un quatrième (M12) miroirs de courant, et un réseau d'aiguillage constitué par un premier, un deuxième, un troisième et un quatrième transistors (T6, T7, T8, T9), les premier et deuxième miroirs de courant ayant une entrée alimentation reliée au potentiel positif (+ VB) d'une batterie et les troisième et quatrième miroirs de courant ayant une entrée alimentation reliée au potentiel négatif (— VB) de la batterie, le premier transistor (T6) ayant son collecteur relié à une entrée de commande du premier miroir de courant (M9) et son émetteur relié à l'émetteur du deuxième transistor (T7) dont le collecteur est relié à une entrée de commande du quatrième miroir de courant (M12), le troisième transistor (T8) ayant son collecteur relié à une entrée de commande du deuxième miroir de courant (M10) et son émetteur relié à l'émetteur du quatrième transistor (T9) ayant son collecteur relié à une entrée de commande du troisième miroir de courant (M11), les bases des quatre transistors étant reliées au potentiel milieu (— VBF/2) de la tension de batterie filtrée, les émetteurs des premier et deuxième transistors étant reliés par l'un des fils de liaison (F10) aux troisièmes moyens (4), et les émetteurs des troisième et quatrième transistors étant reliés par l'autre fil de liaison (F11) aux deuxièmes (6) et troisièmes (4) moyens, une sortie des premier et quatrième miroirs de courant étant reliée à l'un des fils de la ligne d'abonné, et une sortie des deuxième et troisième miroirs de courant étant reliée à l'autre fil de la ligne d'abonné, les quatre miroirs de courant ayant chacun même coefficient d'amplification (K).

7. Joncteur d'abonné selon la revendication 5, caractérisé par le fait que le circuit de compensation (4) comporte en outre un quatrième (M14) et un cinquième (M15) miroirs de courant, le quatrième miroir de courant ayant une entrée alimentation reliée au potentiel positif (0) de la tension de batterie filtrée et une sortie reliée à l'un des fils de liaison (F10), le cinquième miroir de courant ayant une entrée alimentation reliée au potentiel négatif (— VBF) de la tension de batterie filtrée, une sortie reliée à l'autre fil de liaison (F11) et à une sortie des deuxièmes moyens (6), une autre sortie reliée à une entrée de commande du quatrième miroir de courant, et une entrée reliée à travers un générateur de courant (40) à une entrée des deuxièmes moyens (6).

8. Joncteur d'abonné selon la revendication 1, caractérisé par le fait que le premier moyen (7) comporte un amplificateur différentiel (30), un premier et un deuxième miroirs de courant (M3, M4) et un premier et un deuxième transistors (T2, T3), l'amplificateur étant alimenté par une source continue (+, — V) et ayant une entrée positive reliée à la sortie du filtre (5) délivrant une tension proportionnelle à la composante alternative de la tension de ligne, le premier miroir de courant ayant une entrée alimentation reliée à la tension positive de la source continue, le deuxième miroir de courant ayant une entrée alimentation reliée à la tension négative de la source continue, un circuit série constitué par une première résistance (R9), une première diode (D1), une deuxième diode (D2) et une deuxième résistance (R10) étant connecté entre les tensions positive et négative de la source continue et un point commun aux deux diodes étant relié à la sortie de l'amplificateur (30), le premier transistor (T2) ayant son collecteur relié à une entrée de commande du premier miroir de courant (M3) et son émetteur relié à l'émetteur du deuxième transistor (T3) dont le collecteur est relié à une entrée de commande du deuxième miroir de courant (M4), la base du premier transistor étant reliée à un point commun à la première résistance (R9) et à la première diode (D1), la base du deuxième transistor étant reliée à un point commun à la deuxième diode (D2) et à la deuxième résistance (R10), les émetteurs des transistors étant reliés d'une part à l'entrée négative de l'amplificateur (30) et d'autre part à un fil (F7) reliant le premier moyen au central téléphonique, et les deux miroirs de courant ayant une sortie reliée par une liaison (F8) à l'entrée négative de l'amplificateur (35) et à une entrée de commande d'un miroir de courant (M5) des deuxièmes moyens (6).

9. Joncteur d'abonné électronique selon les revendications 3 et 8, caractérisé par le fait que le deuxième amplificateur (26) du filtre (5) est relié en sortie au premier moyen (7) à travers une résistance (R16) d'un circuit de détection de boucle en phase sonnerie (10) qui comporte des moyens qui, sous commande d'un signal (E1) lié à l'envoi d'un signal de sonnerie sur la ligne d'abonné, reliant ladite sortie du deuxième amplificateur (26) à la masse analogique (VAG) à travers ladite résistance (R16) et délivrent un courant au deuxième amplificateur (26) à travers le condensateur (C), de manière à améliorer le filtrage en augmentant électroniquement la valeur du condensateur.

10. Joncteur d'abonné électronique selon la revendication 1, caractérisé par le fait qu'il comporte également un circuit de détection de boucle (3) comportant un miroir de courant (M13) et un amplificateur différentiel (37), le miroir de courant ayant une entrée de commande reliée à une sortie des deuxièmes moyens (6), une entrée alimentation reliée à une tension négative (—V) d'une source continue, et une sortie reliée à une masse analogique (VAG) par une première résistance (R12) et à une entrée négative de l'amplificateur dont l'entrée positive est reliée, d'une part à la masse analogique par une deuxième résistance (R13) et, d'autre part, à la tension négative (—V) de la source continue par une troisième résistance (R14), l'amplificateur étant alimenté par la source continue et sa sortie constituant la sortie du circuit de détection de boucle.

## Claims

1. An electronic subscriber junctor for connnecting a subscriber line to a telephone exchange, including an input amplifier circuit (2) generating a compensation voltage (Umc) proportional to a common mode voltage occurring on the line, an output amplifier circuit (1) powered from a battery and having its output connected to two wires (A, B) of the subscriber line, the input amplifier circuit (2) including means (M1, M2, 22) for generating a current (I) proportional to the line voltage, characterized in that the junctor further includes a filter (5) having its input connected to the input amplifier circuit and serving to separate the AC and the DC components of said current (I) which is proportional to the line voltage by means of a single capacitive component (C), and delivering on the one side a voltage proportional to the AC component of the line voltage and on the other side a voltage proportional to the DC component of the line voltage, a first means (7) for connecting the output of filter (5), delivering to the exchange a voltage proportional to the AC component of the line voltage, and delivering a current (is) proportional to the current flowing in a link (F7) with the exchange, second means (6, R') for obtaining a constant current (I1), for summing algebraically the constant current with a DC current derived from the voltage proportional to the DC component of the line voltage, and with the current delivered by the first means (7), and for supplying to the output amplifier circuit (1) a first control current equal to the said algebraic sum, and third means (4) for supplying through said compensation voltage a second control current to the output amplifier circuit via each of two connecting wires (F10, F11) in such a way as to compensate longitudinal currents in the line, each connecting wire carrying the first control current, the output amplifier circuit delivering on each line wire (A, B) a current proportional to the algebraic sum, in each of the connection wires (F10, F11) of the said first and second control currents.

2. An electronic subscriber junctor according to claim 1, characterized in that the input amplifier circuit (2) comprises two differential amplifiers (20, 21) each powered from a filtered battery voltage (0, — VBF) and each having an input connected ton a respective wire (A, B) of the subscriber line, the outputs of the amplifiers being connected by a series circuit consisting of two resistors (R5, R4) and an emitter-base junction of a transistor (T1), a point commun to the two resistors supplying the compensation voltage (Umc) to a wire (F4), and that the means for generating a current (I) proportional to the line voltage are constituted by two current mirrors (M1, M2) powered from a DC supply (+ V, — V) and a current generator (22), a control input of one current mirror (M1) being connected by a current generator (22) to the emitter of the transistor (T1), a control input of the other current mirror (M2) being connected to the collector of the transistor (T1), an output of each current mirror being connected to the filter (5) by a wire (F3) carrying the current proportional to the line voltage.

3. An electronic subscriber junctor according to claim 1, characterized in that the filter (5) comprises first and second differential amplifiers (25, 26) powered from a DC supply (+ V, — V) and heach having a positive input connected to an analog earth (VAG), the first amplifier (25) having a negative input connected by a resistor (R6) to the means generating the current (I) proportional to the line voltage and by a feedback resistor (R7) to its output which is itself connected by another resistor (R) to the second means, the second amplifier (26) having a positive input connected by the capacitor (C) to the means generating a current (I) proportional to the line voltage, and by a feedback resistor (R8) to its output.

4. An electronic subscriber junctor according to claim 1, characterized in that the second means are constituted by a summing circuit (6) and a resistor (R'), the summing circuit comprising a differential amplifier (35) and a current mirror (M5), the differential amplifier being powered by a DC supply (+ V, — V) and having a negative input connected on the one hand through the resistor (R') to a negative potential (— VBF) of a filtered battery voltage, and on the other hand through another resistor (R) to the output from the filter (5) providing a voltage proportional to the DC component of the line voltage, a positive input connected to an analog earth (VAG), and an output connected to a power supply input of the current mirror, which has a control input connected to the positive input of the amplifier (35), a first output connected to one of the connecting wires (F11), and another output connected to the third means (4).

5. An electronic subscriber junctor according to claim 1, characterized in that the third means are constituted by a compensation circuit (4) for longitudinal currents, comprising first (M6), second (M7) and third (M8) current mirrors, a differential amplifier (36) powdered from a filtered battery voltage (0, — VBF) and two series-connected transistors (T4, T5), the amplifier having a positive input connected to the input amplifier circuit (2) from which it receives the compensation voltage (Umc), a negative input connected on the one side to the emitters of the transistors and on the other hand through a resistor (R11) to a mid-point potential (— VBF/2) of the filtered battery voltage, and an output connected to the bases of the transistors, a control input of the first current mirror (M6) being connected to the collector of one of the transistors (T4) and a control input of the second current mirror (M7) being connected to the collector of the other transistor (T5), one output of each of the first, second and third current mirrors being connected to one of the connecting wires (F10), another output of the first and second current mirrors being connected to the other connecting wire (F11) which is itself connected to the second means, the first current mirror (M6) having a power supply input connected to a positive potential (0) of the filtered battery voltage, the second and third current mirrors (M7, M8) having a power supply input connected to the negative potential (— VBF) of the filtered battery voltage.

6. An electronic subscriber junctor according to claim 1, characterized in that the output amplifier circuit comprises first (M9), second (M10), third (M11) and fourth (M12) current mirrors and a routing network consisting of first, second, third and fourth transistors (T6, T7, T8, T9), the first and second current mirrors having a power supply input connected to the positive potential (+ VB) of a battery and the third and fourth current mirrors having a power supply input connected to the negative potential (— VB) of the battery, the first transistor (T6) having its collector connected to a control input of the first current mirror (M9) and its emitter connected to the emitter of the second transistor (T7), the collector of which is connected to a control input of the fourth current mirror (M12), the third transistor (T8) having its collector connected to a control input of the second current mirror (M10) and its emitter connected to the emitter of the fourth transistor (T9) which has its collector connected to a control input of the third current mirror (M11), the bases of the four transistors being connected to the mid-point potential (— VBF/2) of the filtered battery voltage, the emitters of the first and second transistors being connected by one of the connecting wires (F10) to the third means (4) and the emitters of the third and fourth transistors being connected by the other connecting wir (F11) to the second (6) and third (4) means, an output of the first and fourth current mirrors being connected to one of the subscriber line wires, and an output of the second and third current mirrors being connected to the other wire of the subscriber line, the four current mirrors all having the same gain (K).

7. A subscriber junctor according to claim 5, characterized in that the compensation circuit (4) further comprises fourth (M14) and fifth (M15) current mirrors, the fourth current mirror having a power supply input connected to the positive potential (0) of the filtered battery voltage and an output connected to one of the connecting wires (F10), the fifth current mirror having a power supply input connected to the negative potential (— VBF) of the filtered battery voltage, an output connected to the other connecting wire (F11) and to an output of the second means (6), another output connected to the control input of the fourth current mirror, and an input connected through a current generator (40) to an input of the second means (6).

8. A subscriber junctor according to claim 1, characterized in that the first means (7) comprises a differential amplifier (30), first and second current mirrors (M3, M4) and first and second transistors (T2, T3), the amplifier being powdered by a DC supply (+ V, — V) and having a positive input connected to the output of the filter (5) delivering a voltage proportional to the AC component of the line voltage, the first current mirror having a power supply input connected to the positive voltage of the DC supply, the second mirror having a power supply input connected to the negative voltage of the DC supply, a series circuit consisting of a first resistor (R9), a first diode (D1), a second diode (D2) and a second resistor (R10) being connected between the positive and negative voltages of the DC supply, and a point common to the two diodes being connected to the output of the amplifier (30), the first transistor (T2) having its collector connected to a control input of the first current mirror (M3) and its emitter connected to the emitter of the second transistor (T3), the collector of which is connected to a control input of the second current mirror (M4), the base of the first transistor being connected to a point common to the first resistor (R9) and the first diode (D1), the base of the second transistor being connected to a point common to the second diode (D2) and the second resistor (R10), the emitters of the transistors being connected on the one hand to the negative input of the amplifier (30) and on the other hand to a wire (F7) connecting the first means to the telephone exchange, and the two current mirrors having an output connected by a link (F8) to the negative input of the amplifier (35) and to a control input of a current mirror (M5) of the second means (6).

9. An electronic subscriber junctor according to claims 3 and 8, characterized in that the second amplifier (26) of the filter (5) is connected to the first means (7) through a resistor (R16) of a ringing phase loop detection circuit (10) which comprises means which, under the control of a signal (E1) associated with sending of a ringing signal over the subscriber line, connect said output of the second amplifier (26) to the analog earth (VAG) through said resistor (R16) and deliver a current to the second amplifier (26) through the capacitor (C), so as to improve the filtering action by electronically enhancing the value of the capacitor.

10. An electronic subscriber junctor according to claim 1, characterized in that it further comprises a loop detection circuit (3) comprising a current mirror (M13) and a differential amplifier (37), the current mirror having a control input connected to an output of the second means (6), a power supply input connected to a negative voltage (— V) of a DC supply, and an output connected to an analog earth (VAG) by a first resistor (R12) and to a negative input of the amplifier, the positive input of which is connected on the one hand to the analog earth by a second resistor (R13) and on the other hand to the negative voltage (— V) of the DC supply by a third resistor (R14), the amplifier being powdered from the DC supply and its output constituting the output of the loop detection circuit.

## Patentansprüche

1. Elektronischer Teilnehmerverbindungssatz für den Anschluß einer Teilnehmerleitung an eine Telefonzentrale, mit einem Eingangsverstärkerkreis (2) zur Erzeugung einer Kompensationsspannung (Umc), welche einer auf der Leitung vorhandenen sog. Common-mode-Spannung proportional ist, und mit einem batterie-gespeisten Ausgangsverstärker (1), welcher ausgangsseitig an zwei Adern (A, B) der Teilnehmerleitung angeschlossen ist, wobei der Eingangsverstärkerkreis (2) Mittel (M1, M2, 22) zur Erzeugung eines Stromes (I) besitzt, der der Leitungsspannung proportional ist, dadurch gekennzeichnet, daß der Teilnehmerverbindungssatz weiter ein Filter (5) besitzt, welches eingangsseitig mit dem Eingangsverstärkerkreis verbunden ist und mithilfe eines einzigen Kondensators (C) die Trennung der Gleich- und Wechselstromkomponente des zur Leitungsspannung proportionalen Stromes (I) bewirkt, und der einerseits eine zur Wechselspannungskomponente der Leitungsspannung, andererseits eine zur Gleichspannungskomponente der Leitungsspannung proportionale Spannung liefert, daß ein erstes Mittel (7) vorgesehen ist, welches den Ausgang des Filters (5), das eine zur Wechselkomponente der Leitungsspannung proportionale Spannung liefert, mit der Zentrale verbinden und einen Strom (is) liefert, der dem in einer Verbindungsleitung (F7) zur Zentrale fließenden Strom gleich ist, daß zweite Mittel (6, R') vorgesehen sind, um einen konstanten Strom (I) zu erhalten, um den konstanten Strom algebraisch mit einem Gleichstrom, der aus der zur Gleichspannungskomponente der Leitungsspannung proportionalen Spannung resultiert, sowie mit dem von den ersten Mitteln (7) gelieferten Strom (is) zu addieren, und um an den Ausgangsverstärkerkreis (1) einen ersten Steuerstrom zu liefern, der dieser algebraischen Summe gleich ist, und daß dritte Mittel (4) vorgesehen sind, um aus der genannten Kompensationsspannung über jeden von zwei Verbindungsdrähten (F10, F11) ein zweiter Steuerstrom an den Ausgangsverstärkerkreis zur Kompensation der Längsströme in der Leitung zu liefern, wobei jeder Verbindungsdraht von dem ersten Steuerstrom durchflossen wird und der Ausgangsverstärkerkreis durch jede Ader (A, B) der Leitung einen der algebraischen Summe der ersten und zweiten Steuerströme in jedem Verbindungsdraht (F10, F11) proportionalen Strom schickt.

2. Elektronischer Teilnehmerverbindungssatz nach Anspruch 1, dadurch gekennzeichnet, daß der Eingangsverstärkerkreis (2) zwei Differentialverstärker (20, 21) aufweist, von denen jeder aus einer gefilteren Batteriespannung (0, — VBF) gespeist wird und einen Eingang besitzt, der mit einer Ader (A, B) der Teilnehmerleitung verbunden ist, während die Ausgänge der Verstärker über einen Serienkreis bestehend aus zwei Widerständen (R5, R4) und einem Emitter-Basis-Übergang eines Transistors (T1) miteinander verbunden sind, wobei ein gemeinsamer Anschlußpunkt der beiden Widerstände die Kompensationsspannung (Vmc) an einen Draht (F4) liefert und daß die Mittel zur Erzeugung eines der Leitungsspannung proportionalen Stroms (I) aus zwei Stromspiegelungskreisen (M1, M2) und einem Stromgenerator (22) bestehen, wobei die beiden Stromspiegelungskreise (M1, M2) aus einer Gleichspannungsquelle (+ V, — V) gespeist werden und ein Steuereingang eines Stromspiegelungskreises (M1) über einen Stromgenerator (22) an den Emitter des Transistors (T1) geschaltet ist, während ein Steuereingang des anderen Stromspiegelungskreises (M2) an den Kollektor des Transistors (T1) geschaltet ist, und ein Ausgang jedes Stromspiegelungskreises über einen Draht (F3), in welchem der zur Leitungsspannung proportionale Strom fließt, an das Filter (5) angeschlossen ist.

3. Elektronischer Teilnehmerverbindungssatz nach Anspruch 1, dadurch gekennzeichnet, daß das Filter (5) einen ersten und einen zweiten Differentialverstärker (25, 26) aufweist, die von der genannten Gleichspannungsquelle (+ V, — V) gespeist werden und die je einen positiven Eingang besitzen, der mit einer Analogerde (VAG) verbunden ist, wobei der erste Verstärker (25) einen negativen Eingang besitzt,

0 096 756

der über einen Widerstand (R6) an die Mittel angeschlossen ist, die den zur Leitungsspannung proportionalen Strom (I) erzeugen, und über einen Rückkopplungswiderstand (R7) an seinen Ausgang, welcher seinerseits über eine weiteren Widerstand (R) an die zweiten Mittel geschaltet ist, und wobei der zweite Verstärker (26) einen positiven Eingang besitzt, der über den Kondensator (C) an die Mittel, die den zur Leitungsspannung proportionalen Strom (I) erzeugen, und über einen Rückkopplungswiderstand (R8) an seinen Ausgang angeschlossen ist.

4. Elektronischer Teilnehmerverbindungssatz nach Anspruch 1, dadurch gekennzeichnet, daß die zweiten Mittel aus einem Summierungskreis (6) und einem Widerstand (R') bestehen, daß der Summierungskreis einen Differentialverstärker (35) und einen Stromspiegelungskreis (M5) aufweist und der Differentialverstärker aus einer Gleichspannungsquelle (+ V, — V) gespeist wird und mit einem negativen Eingang einerseits über einen Widerstand (R') an das negative Potential (— VBF) einer gefilterten Batteriespannung gelegt ist, und andererseits über einen anderen Widerstand (R) an den Ausgang des Filters (5) geschaltet ist, welches die zur Gleichkomponente der Leitungsspannung proportionale Spannung liefert, und daß der Differentialverstärker (35) mit einem positiven Eingang an eine Analogerde (VAG) gelegt ist, und über einen Ausgang mit einem Versorgungseingang des Stromspiegelkreises verbunden ist, wobei der Stromspiegelkreis einen Steuereingang, der mit dem positiven Eingang des verstärkers (35) verbunden ist, einen mit einem der Verbindungsdrähte (F11) verbundenen ersten Ausgang und einen mit den dritten Mitteln (4) verbundenen weiteren Ausgang besitzt.

5. Elektronischer Teilnehmerverbindungssatz nach Anspruch 1, dadurch gekennzeichnet, daß die dritten Mittel aus einem Längsstromkompensationskreis (4) bestehen, der eine ersten (M6), zweiten (M7) und dritten Stromspiegelungskreis (M8), einen von der filtrierten Batteriespannung (0, — VBF) gespeisten Differentialverstärker (36) und zwei Transistoren (T4, T5) in Serie besitzt, wobei der Verstärker mit einem positiven Eingang an den Eingangsverstärkerkreis (2), von welchem er die Kompensationsspannung (Vmc) zugeführt erhält, mit einem negativen Eingang einerseits an die Transistoremitter, andererseits über einen Widerstand (R11) an einen Zwischenabgriff (— VBF/2) der gefilterten Batteriespannung und mit einem Ausgang an die Basiselektroden der Transistoren angeschlossen ist, wobei ein Steuereingang des ersten Stromspiegelungskreises (M6) mit dem Kollektor des einen Transistors (4) und ein Steuereingang des zweiten Stromspiegelungskreises (M7) mit dem Kollektor des anderen Transistors (T5) verbunden ist, und ein Ausgang des ersten, zweiten und dritten Stromspiegelungskreises mit dem einen der Verbindungsdrähte (F10) und ein anderer Ausgang des ersten und zweiten Stromspiegelungskreises mit dem anderen Verbindungsdraht (F11) verbunden ist, der seinerseits an die zweiten Mittel angeschaltet ist, und wobei der erste Stromspiegelungskreis (M6) einen mit dem positiven Potential (0) der gefilterten Batteriespannung verbundenen Versorgungseingang besitzt, während die zweiten und dritten Stromspiegelungskreise (M7, M8) einen Versorgungseingang besitzen, der an das negative Potential (— VBF) der gefilterten Batteriespannung angeschlossen ist.

6. Elektronischer Teilnehmerverbindungssatz nach Anspruch 1, dadurch gekennzeichnet, daß der Ausgangsverstärkerkreis einen ersten (M9), zweiten (M10), dritten (M11) und vierten (M12) Stromspiegelungskreis sowie einen Weichenkreis, bestehend aus einem ersten, zweiten, dritten und vierten Transistor (T6, T7, T8, T9), aufweist, wobei der erste und zweite Stromspiegelungskreis einen Versorgungseingang besitz, der mit dem positiven Potential (+ VB) einer Batterie verbunden ist, und der dritte und vierte Stromspiegelungskreis einen Versorgungseingang besitzen, der mit dem negativen Potential (— VB) der Batterie verbunden ist, und wobei der erste Transistor (T6) mit seinem Kollektor an einen Steuereingang des ersten Stromspiegelungskreises (M9) und mit seinem Emitter an den Emitter des zweiten Transistors (T7) angeschlossen ist, dessen Kollektor mit einem Steuereingang des vierten Stromspiegelungskreises (M12) verbunden ist, während der dritte Transistor (T8) mit seinem Kollektor an einen Steuereingang des zweiten Stromspiegelungskreises (M10) und mit seinem Emitter an den Emitter des vierten Transistors (T9) angeschlossen ist, dessen Kollektor mit einem Steuereingang des dritten Stromspiegelungskreises (M11) verbunden ist, und die Basen der vier Transistoren an das Zwischenabgriffspotential (— VBF/2) der gefilterten Batteriespannung gelegt sind, daß die Emitter des ersten und zweiten Transistors über einen der Verbindungsdrähte (F10) an die dritten Mittel (4) gelegt sind, während die Emitter des dritten und des vierten Transistors über den anderen Verbindungsdraht (F11) an die zweiten (6) und dritten (4) Mittel gelegt sind, und daß ein Ausgang des ersten und vierten Stromspiegelungskreises mit einer Ader der Teilnehmerleitung und ein Ausgang des zweiten und dritten Stromspiegelungskreises mit der anderen Ader der Teilnehmerleitung verbunden ist und jeder der vier stromspiegelungskreise den gleichen Verstärkungsfaktor (K) besitzt.

7. Teilnehmerverbindungssatz nach Anspruch 5, dadurch gekennzeichnet, daß der Kompensationskreis (4) weiter einen vierten (M14) und einen fünften Stromspiegelungskreis (M15) aufweist, wobei der vierte Stromspiegelungskreis einen mit dem positiven Potential (0) der gefilterten Batteriespannung verbundenen Versorgungseingang sowie einen Ausgang besitzt, der an einen der Verbindungsdrähte (F10) angeschlossen ist, während der fünfte Stromspiegelungskreis einen mit dem negativen Potential (— VBF) der gefilterten Batteriespannung verbundenen Versorgungseingang sowie einen Ausgang, der an den anderen Verbindungsdraht (F11) sowie an einen Ausgang der zweiten Mittel geschaltet ist, sowie ein weiterer Ausgang, der an den Eingang des vierten Stromspiegelungskreises angeschlossen ist und einen Eingang besitzt, der über einen Stromgenerator (40) an den Eingang der zweiten Mittel (6) geschaltet ist.

14

8. Teilnehmerverbindungssatz nach Anspruch 1, dadurch gekennzeichnet, daß das erste Mittel (7) einen Differentialverstärker (30), ein ersten und zweiten Stromspiegelungskreis (M3, M4) und einen ersten und einen zweiten Transistor (T2, T3) aufweist, wobei der Verstärker aus einer Gleichspannungsquelle (+ V, — V) versorgt wird und einen positiven Eingang besitzt, der mit dem eine zur Wechselkomponente der Leitungsspannung proportionale Spannung lieferndern Ausgang des Filters (5) verbunden ist, wobei der erste Stromspiegelungskreis einen mit der positiven Spannung der Gleichspannungsquelle verbundenen Versorgungseingang und der zweite Stromspiegelungskreis einen mit der negativen Spannung der Gleichspannungsquelle verbundenen Versorgungseingang besitzt, daß eine Serienschaltung bestehend aus einem ersten Widerstand (R9), einer ersten Diode (D1), einer zweiten Diode (D2) und einem zweiten Widerstand (R10) zwischen die positive und negative Spannung der Gleichspannungsquelle geschaltet ist, wobei ein den beiden Dioden gemeinsamer Anschlußpunkt mit dem Ausgang des verstärkers (30) verbunden ist und der erste Transistor (T2) mit seinem Kollektor an einen Steuereingang des ersten Stromspiegelungskreises (M3) und mit seinem Emitter an den Emitter des zweiten Transistors (T3) angeschlossen ist, dessen Kollektor an den Steuereingang des zweiten Stromspiegelungskreises (M4) gelegt ist, wobei die Basis des ersten Transistors an einen dem ersten Widerstand (R9) und der ersten Diode (D1) gemeinsamen Anschlußpunkt und die Basis des zweiten Transistors an einen der zweiten Diode (D2) und dem zweiten Widerstand (R10) gemeinsamen Anschlußpunkt geschaltet ist, wobei die Emitter der Transistoren zum einen an den negativen Eingang des Verstärkers (30) und zum anderen an einen Draht (F7) angeschlossen sind, welcher das erste Mittel mit der Telefonzentrale verbindet, und wobei die beiden Stromspiegelungskreise einen Ausgang besitzen, der über eine Verbindung (F8) an den negativen Eingang des Verstärkers (35) sowie an eine Steuereingang eines Stromspiegelungskreises (M5) der zweiten Mittel (6) angeschlossen ist.

9. Elektronischer Teilnehmerverbindungssatz nach den Ansprüchen 3 und 8, dadurch gekennzeichnet, daß der zweite Verstärker (26) des Filters (5) ausgangsseitig über einen Widerstand (R16) eines Schleifendetektorkreises (10) in der Läutephase an das erste Mittel (7) angeschlossen ist, wobei dieser Kreis Mittel aufweist, welche auf Befehl eines an die Aussendung eines Läutesignals über die Teilnehmerleitung gebundenen Signals (E1) den Ausgang des zweiten Verstärkers (26) über den Widerstand (R16) an die Analogerde (VAG) legen und über den Kondensator (C) einen Strom an den zweiten Verstärker (26) liefern, derart, daß über die elektronische Vergrößerung der Kapazität des Kondensators die Filterung verbessert wird.

10. Elektronischer Teilnehmerverbindungssatz nach Anspruch 1, dadurch gekennzeichnet, daß er weiter einen Schleifendetektorkreis (3) aufweist, der einen Stromspiegelungskreis (M13) und einen Differentialverstärker (37) besitzt, wobei der Stromspiegelungskreis mit einem Steuereingang an den Ausgang der zweiten Mittel (6), mit einem Versorgungseingang an eine negative Spannung (— V) einer Gleichspannungsquelle, und mit einem Ausgang über einen ersten Widerstand (R12) an eine Analogerde (VAG) sowie an einen negativen Eingang des Verstärkers angeschlossen ist, dessen positiver Eingang zum einen über einen zweiten Widerstand (R13) mit der Analogerde und zum anderen über einen dritten Widerstand (R14) mit der negativen Spannung (— V) der Gleichspannungsquelle verbunden ist, wobei der Verstärker aus der Gleichspannungsquelle versorgt wird und sein Ausgang den Ausgang des Schleifendetektorkreises bildet.

FIG.1

**GENERATEUR** — 12

**AMPLIFICATEUR DE SORTIE** — 1
+VB  −VB  VBF/2

**DETECTION DE BOUCLE** — 3
+V  −V  F13

**CIRCUIT DE COMPENSATION** — 4
0  −VBF  −VBF/2

**CIRCUIT DE SOMMATION** — 6
+V  −V  VAG

**AMPLIFICATEUR D'ENTRÉE** — 2
0  −VBF  −V  +V

**FILTRE** — 5
+V  −V

**INTERFACE** — 7
+V  −V

**DETECTION DE BOUCLE EN PHASE SONNERIE** — 10

F1', F2', F1, F2, F3, F4, F5, F6, F7, F8, F9, F10, F11, F12, F14, F15, F16, F17, F18

R1, R2, R3, R, R', A, A1, A2, A3, B, B1, B2, B3, J, D, E1, a, b, is, I1, I2, 8, 9, 13

0 096 756

FIG.2

$$Umc = p\frac{UA+UB}{2}$$

FIG.3

## FIG.4

## FIG.6

FIG.5

FIG.7

# FIG.8

# FIG.9